# EUROPÄISCHE PATENTSCHRIFT

(11) **EP 2 447 585 B1**
(45) Veröffentlichungstag und Bekanntmachung des Hinweises auf die Patenterteilung: **26.02.2014**
(21) Anmeldenummer: 10014018.5
(22) Anmeldetag: 27.10.2010
(51) Int. Cl.: F16L 9/00, F16L 9/127, F16L 11/12

(54) **Rohr**
Pipe
Tuyau

(43) Veröffentlichungstag der Anmeldung: 02.05.2012
(73) Patentinhaber: Dipl.-ing. I. Özpolat Kunststofferzeugnisse GmbH, 64385 Reichelsheim (Odenwald) (DE)
(72) Erfinder: Özpolat, Ilgaz, 64385 Reichelsheim (DE)
(74) Vertreter: Dörner, Kötter & Kollegen

(56) Entgegenhaltungen:
- EP-A1- 2 491 290
- WO-A1-2011/048105
- DE-A1- 10 116 883
- DE-T2- 69 314 476
- FR-A1- 2 941 763

## Beschreibung

Die Erfindung betrifft ein Rohr, insbesondere zur Wasser- oder Luftführung, mit Wandelementen aus einem formstabilen Material, wobei ausgehend von einem im Wesentlichen rechteckigen Querschnitt in den Ecken die Wandelemente über Verbindungsstreifen mit benachbarten Wandelementen verbunden sind.

Rohre der hier betrachteten Art finden in vielfältiger Weise Anwendung, Sie werden beispielsweise eingesetzt, um angesaugte, in der Regel verunreinigte Luft einem Filter zuzuführen beziehungsweise aus dem jeweiligen Raum ins Freie abzuleiten. Bei den wasserführenden Rohren kann es sich beispielsweise um Sammelrohre für Regenwasser in Form von Fallrohren an Regenrinnen handeln. Die Rohre können unterschiedliche Querschnitte aufweisen, Üblicherweise finden runde oder rechteckige Querschnitte Verwendung. Bei den bekannten Rohren ist nachteilig, dass sie aufgrund ihrer festen Form ein verhältnismäßig großes Lager- und Transportvolumen benötigen.

Zur Beseitigung dieses Nachteils ist aus der DE 101 16 883 A1 ein Abluftrohr bekannt, welches einen rechteckigen Querschnitt aufweist und bei dem formstabile Wandelemente durch Verbindungsstreifen aus einem flexiblen Material miteinander verbunden sind. Hierdurch ist die Möglichkeit geschaffen, eine variable Geometrie bereitzustellen, so dass aufgrund der formstabilen Wandelemente im Gebrauchszustand eine feste Form vergleichbar zu den bekannten starren Abluftrohren geschaffen ist, während durch die Verbindungsstreifen aus flexiblen Material die Möglichkeit geschaffen ist, für die Lagerung und den Transport das Abluftrohr in einen komprimierten Zustand zu bringen, in welchem ein geringeres Volumen vorliegt. Der so ausgebildete Abluftkanal erfüllt alle Anforderungen und bietet die Möglichkeit eines kostensparenden Transports und der Lagerung.

Im Einsatzbereich von Rohren sind oftmals Übergänge erforderlich, bei denen von einem eckigen Querschnitt des Rohrs ein Übergang in ein rundes Rohr oder umgekehrt erforderlich ist. Hierzu ist es bisher notwendig, Übergangsstücke zu verwenden, die auf den jeweiligen Anwendungsfall abzustimmen sind, sowohl was ihre Länge als auch die jeweiligen Durchmesser und Querschnitte betrifft. Dies erweist sich in der Regel als umständlich und teuer, da die Übergangsstücke nicht in beliebigen Abmessungen vorhanden sind. In Folge dessen muss bei der Erstellung des kompletten Rohrs jeweils auf die Abmessungen der Übergangsstücke Rücksicht genommen werden, um einen zuverlässigen und damit dichten Übergang zu schaffen.

Hier will die Erfindung Abhilfe schaffen. Der Erfindung liegt die Aufgabe zugrunde, ein Rohr, insbesondere zur Wasser- oder Luftführung, zu schaffen, das einerseits einen platzsparenden und damit preiswerten Transport und eine ebensolche Lagerung ermöglicht, andererseits die Möglichkeit bereitstellt, einen Übergang von einem eckigen auf einen runden Querschnitt ohne Verwendung zusätzlicher Zwischenstücke zu ermöglichen. Gemäß der Erfindung wird diese Aufgabe durch die Merkmale des Patentanspruchs 1 gelöst.

Mit der Erfindung ist ein Rohr geschaffen, welches die Vorteile bekannter Rohre hinsichtlich ihrer Transport- und Lagerungsabmessungen nutzt und gleichzeitig einen Übergang von einem eckigen auf einen runden Querschnitt des Rohrs oder umgekehrt ohne Verwendung eines zusätzlichen Zwischenstücks ermöglicht. Hierdurch ist die Flexibilität und der Einsatzbereich des Rohrs wesentlich erweitert. Insbesondere ist die Bevorratung von zusätzlichen Zwischenstücken für die Erstellung eines Übergangs zwischen unterschiedlichen Querschnitten der Rohre nicht mehr erforderlich.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: einen Querschnitt eines erfindungsgemäßen Rohrs im rechteckigen Gebrauchszustand;
- Figur 2: einen Querschnitt durch das Rohr nach Figur 1 im komprimierten Lager- und Transportzustand und
- Figur 3: einen Querschnitt durch ein erfindungsgemäßes Rohr im Gebrauchszustand als Übergang zwischen einem rechteckigen und einem runden Querschnitt.

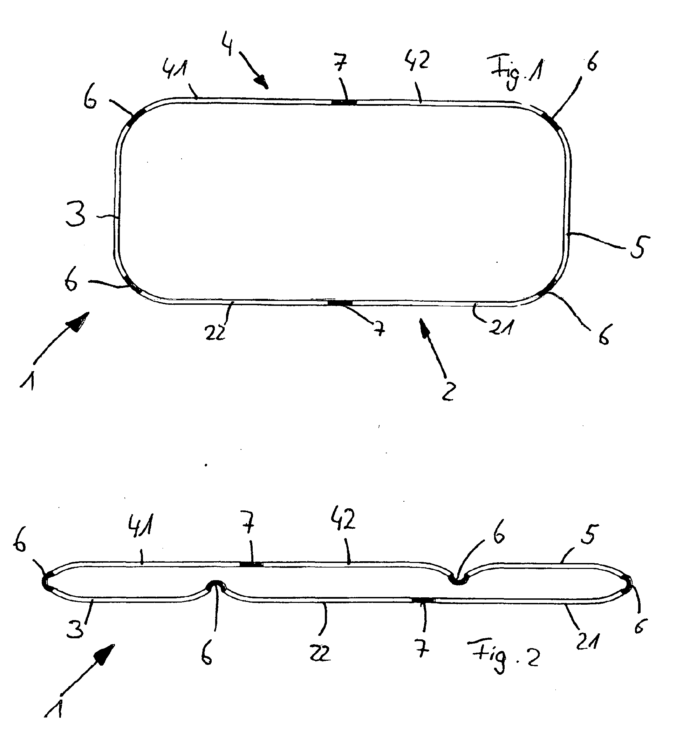

Das das Ausführungsbeispiel gewählte Rohr 1 hat im normalen Gebrauchszustand einen im Wesentlichen rechteckigen Querschnitt, wie es in Figur 1 ersichtlich ist. Erkennbar sind die Ecken abgerundet ausgebildet. Das Rohr 1 besteht aus Wandelementen 2, 3, 4 und 5 aus einem formstabilen Material. Bei dem Material handelt es sich um einen Hartkunststoff, der vorzugsweise aus Hart-PVC gebildet ist, Die Wandelemente 2, 3, 4 und 5 sind im Wesentlichen eben. Sie bilden die Seitenwände des Abluftkanals.

Entlang der abgerundeten Ecken des Rohrs 1 verlaufen in seiner Längsrichtung Verbindungsstreifen 6, die aus einem flexiblen Material hergestellt sind. Vorzugsweise findet als flexibles Material Weich-PVC Anwendung.

Im Ausführungsbeispiel sind die die Längsseiten bildenden Wandelemente 2 und 4 geteilt ausgeführt, wodurch in dem Wandelement 2 Teilelemente 21 und 22 und in dem Wandelement 4 Teilelemente 41 und 42 hervorgerufen sind. Die Teilelemente 21 und 22 sowie die Teilelemente 41 und 42 sind jeweils durch Verbindungsstreifen 7 aus flexiblen Material miteinander verbunden, wobei es sich vorzugsweise bei dem Material für die Verbindungsstreifen 7 aus fertigungstechnischen Gründen um das gleiche Material wie bei den Verbindungsstreifen 6 handelt.

In dem in Figur 1 dargestellten Zustand hat das Rohr 1 einen im Wesentlichen rechteckigen Querschnitt. Dagegen ist es im Ausführungsbeispiel in Figur 2 in seiner komprimierten Form dargestellt. Ersichtlich erfüllen die Verbindungsstreifen 6 dabei die Funktion von Scharnieren, die es ermöglichen, das Rohr 1 von einer großvolumigen Form in eine flache und damit komprimierte Form zu überführen. In der komprimierten Form sind die Wandelemente 2 und 4 nach wie vor zueinander parallel ausgerichtet, während die Wandelemente 3 und 5, die im Zustand nach Figur 1 im Wesentlichen rechtwinkelig zu den Wandelementen 2 und 4 ausgerichtet sind, ebenfalls in eine parallele Position gebracht sind. Erkennbar ist das Volumen des Rohrs 1 nach Figur 2 wesentlich geringer, als das Volumen des Rohrs in dem in Figur 1 dargestellten Zustand.

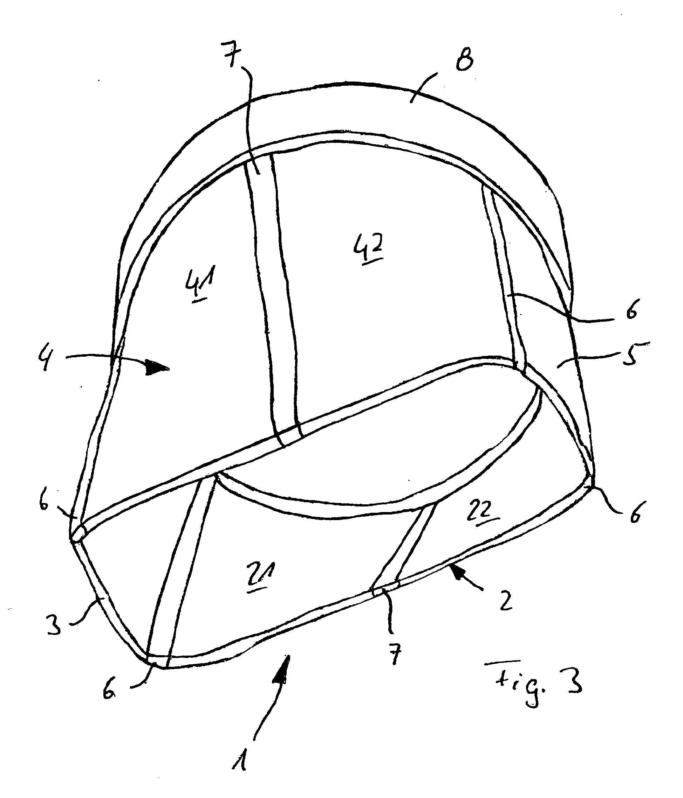

Bei dem in Figur 3 dargestellten Zustand ist das Rohr 1 als Übergang von einem runden auf einen im Wesentlichen rechteckigen Querschnitt dargestellt. Die Ansichtsseite der Darstellung nach Figur 3 entspricht der Darstellung nach Figur 1, in der das Rohr 1 eine im Wesentlichen rechteckige Ausbildung aufweist. Dagegen weist die abgewandte Seite des Abluftrohres 1 einen runden Querschnitt auf. Das Rohr 1 geht in diesem Bereich in ein rundes mit "8" gekennzeichnetes Rohr über. Wie aus Figur 3 ersichtlich, übernehmen sowohl die Verbindungsstreifen 6 als auch die Verbindungsstreifen 7 aufgrund der Verbindung des weichen Materials die Flexibilität zur Nachbildung des runden Querschnitts. Durch die zusätzliche Anordnung der Verbindungsstreifen 7 ist diese Möglichkeit geschaffen. Durch die Verwendung weiterer Verbindungsstreifen 7 ist eine noch kleinere Teilung möglich. Dabei ist jedoch zu beachten, dass die Stabilität des Rohrs 1 ausreichend groß sein muss, um einen zuverlässigen Betrieb zu ermöglichen.

In Abwandlung des Ausführungsbeispiels besteht auch die Möglichkeit, die stirnseitigen Wandelemente 3 und 5 zu teilen und zwischen den dann ausgebildeten Teilelementen jeweils einen Verbindungsstreifen 7 vorzusehen. Auch hierdurch ist eine weitere Flexibilisierung der Formgebung möglich. Insgesamt erweitert das erfindungsgemäße Rohr 1 den Einsatzbereich bekannter Rohre zur Wasser- oder Luftführung erheblich, da neben einem geringen Transport- und Lagervolumen und den sich daraus ergebenden geringeren Kosten zusätzlich eine Funktion als Übergangsstück zwischen einem rechteckigen Querschnitt des Rohrs zu einem runden Querschnitt möglich ist. Es kann daher auf die Verwendung der sonst üblichen Zwischenstücke verzichtet werden, was die Flexibilität erhöht und gleichzeitig die Kosten reduziert. Die Flexibilität ermöglicht des Weiteren drei verschiedene Rechteck-Rohrquerschnitte abzudecken. Außerdem bewirkt die Veränderung zu einem leicht gewölbten Querschnitt eine zusätzliche höhere Luftführung bei Verwendung des Rohres als Abluftkanal.

## Patentansprüche

1. Rohr (1), insbesondere zur Wasser- oder Luftführung, mit Wandelementen (2, 3, 4, 5) aus einem formstabilen Material, wobei ausgehend von einem im Wesentlichen rechteckigen Querschnitt in den Ecken die Wandelemente über Verbindungsstreifen (6) mit benachbarten Wandelementen verbunden sind, **dadurch gekennzeichnet, dass** genau zwei gegenüberliegende und Wandelemente (2,4) bildende Längsseiten nur einmal geteilt ausgeführt sind, wodurch Teilelemente (21, 22, 41, 42) ausgebildet sind, die mit Verbindungsstreifen (7) aus einem flexiblen Material miteinander verbunden sind.

2. Rohr nach Anspruch 1, **dadurch gekennzeichnet, dass** die Teilung der Wandelemente (2) in Längsrichtung des Abluftrohres (1) verläuft.

3. Rohr nach einem der Ansprüche 1 oder 2, **dadurch gekennzeichnet, dass** die Verbindungsstreifen (6, 7) in Längsrichtung des Abluftrohres (1) verlaufen.

4. Rohr nach einem oder mehreren der vorgenannten Ansprüche, **dadurch gekennzeichnet, dass** die Wandelemente (2, 3, 4, 5) im Wesentlichen eben sind.

5. Rohr nach einem oder mehreren der vorgenannten Ansprüche, **dadurch gekennzeichnet, dass** die Wandelemente (2, 3, 4, 5) aus einem Hartkunststoff, vorzugsweise aus Hart-PVC bestehen.

6. Rohr nach einem oder mehreren der vorgenannten Ansprüche, **dadurch gekennzeichnet, dass** die Verbindungsstreifen (6, 7) aus einem Weichkunststoff, vorzugsweise aus Weich-PVC bestehen.

## Claims

1. Pipe (1), especially for carrying water or air, with wall elements (2, 3, 4, 5) made of a dimensionally stable material, where, assuming that the cross section in the corners is substantially rectangular, the wall elements are connected with adjacent wall elements by means of connecting strips (6),
**characterised in that** exactly two opposing longitudinal sides forming wall elements (2, 4) are divided only once, thereby forming partial elements (21, 22, 41, 42) which are connected to one another by a connecting strip (7) of a flexible material.

2. Pipe in accordance with claim 1, **characterised in that** the division of the wall elements (2) runs in the lengthwise direction of the exhaust-air pipe (1).

3. Pipe in accordance with either of the claims 1 or 2, **characterised in that** the connecting strips (6, 7) run in the lengthwise direction of the exhaust-air pipe (1).

4. Pipe in accordance with one or more of the aforementioned claims, **characterised in that** the wall elements (2, 3, 4, 5) are substantially even.

5. Pipe in accordance with one or more of the aforementioned claims, **characterised in that** the wall elements (2, 3, 4, 5) consist of rigid plastic material, preferably hard PVC.

6. Pipe in accordance with one or more of the aforementioned claims, **characterised in that** the connecting strips (6, 7) consist of soft plastic material, preferably soft PVC.

## Revendications

1. Tuyau (1), en particulier pour conduire l'eau ou l'air, avec éléments parois (2, 3, 4, 5) en matériau de forme stable, sachant que partant d'une section essentiellement rectangulaire dans les coins, les éléments parois sont reliés avec des éléments de paroi voisins via des bandes de liaison (6), **caractérisé en ce que** deux côtés longitudinaux se trouvant exactement l'un en face de l'autre et formant des éléments parois (2, 4) ne sont réalisés partagés qu'une seule fois, de sorte à former des éléments partiels (21, 22, 41, 42) reliés entre eux par des bandes de liaison (7) en matériau flexible.

2. Tuyau selon la revendication 1, **caractérisé en ce que** la division des éléments parois (2) présente un tracé dans le sens longitudinal du tuyau (1) d'air sortant.

3. Tuyau selon l'une des revendications 1 ou 2, **caractérisé en ce que** les bandes de liaison (6, 7) présentent un tracé dans le sens longitudinal du tuyau (1) d'air sortant.

4. Tuyau selon l'une ou plusieurs des revendications précédentes, **caractérisé en ce que** les éléments parois (2, 3, 4, 5) sont essentiellement plats.

5. Tuyau selon l'une ou plusieurs des revendications précédentes, **caractérisé en ce que** les éléments parois (2, 3, 4, 5) sont en matière plastique dure, de préférence en PVC dur.

6. Tuyau selon l'une ou plusieurs des revendications précédentes, **caractérisé en ce que** les éléments de liaison (6, 7) sont en matière plastique molle, de préférence en PVC mou.
